# EUROPÄISCHE PATENTSCHRIFT

(11) **EP 0 424 698 B1**
(45) Veröffentlichungstag und Bekanntmachung des Hinweises auf die Patenterteilung: **27.12.1996**
(21) Anmeldenummer: 90118896.1
(22) Anmeldetag: 03.10.1990
(51) Int. Cl.: B01J 20/32

(54) **Zur Eliminierung von Biomakromolekülen insbesondere LDL und Endotoxinen, aus Vollblut in extrakorporalem Kreislauf geeignetes Adsorbens**
Adsorbent for removing biomacromolecules, particularly LDL and endotoxines, from whole blood in extracorporeal circuit
Adsorbant pour éliminer du sang des biomacromolécules, en particulier les endotoxines et LDL, dans un circuit extracorporel

(30) Priorität: 03.10.1989 DE 3932971
(43) Veröffentlichungstag der Anmeldung: 02.05.1991
(73) Patentinhaber: Fresenius AG, D-61350 Bad Homburg (DE)
(72) Erfinder: Veit, Otto, Dr. Dipl.-Biologe, W-6695 Tholey-Theley (DE)
(74) Vertreter: Fuchs, Luderschmidt & Partner Patentanwälte

(56) Entgegenhaltungen:
- EP-A- 0 110 409
- EP-A- 0 143 369
- EP-A- 0 225 867
- GB-A- 2 101 906
- "Fractogel TSK", (10.05.86), Fa Merck, Darmstadt (DE)

## Beschreibung

Bekanntlich ist die Reinigung von Vollblut in einem extrakorporalen Umlaufsystem einer solchen von Blutplasma insbesondere deshalb vorzuziehen, weil erstere apparativ wesentlich weniger aufwendig ist und die Überwachung durch zusätzliches Fachpersonal entbehrlich macht, das nicht in jedem Krankenhaus zur Verfügung steht. Bei der Vollblutreinigung entfällt der verhältnismäßig große Aufwand einer vorherigen Abtrennung der Zellen (Leuko-, Erythro- und Thrombocyten), z.B. in einem Filter, die steter Überwachung bedarf.

Bisher fanden zur Vollblutreinigung ex vivo Adsorbentien aus Aktivkohle oder aus beschichteter Aktivkohle Anwendung, z.B. einer mit einer Lösung von Polyacrylsäure oder von Polyacrylsäure und Polyethylenimin beschichteten Aktivkohle (vgl. UDSSR SU 732 207).

Derartige Adsorbentien aus Aktivkohle bzw. auf Basis von Aktivkohle weisen jedoch den Nachteil einer geringen mechanischen Stabilität, insbesondere bei hohen Drücken, und einer geringen Selektivität gegenüber den zu entfernenden Biomakromolekülen auf.

Es wurden infolgedessen zahlreiche Versuche unternommen, Adsorbentien auf Basis von Kohle (sowie, wenn z.T. auch aus anderen Gründen, auf Basis anorganischer Stoffe) durch ggf. modifizierte natürliche oder synthetische Polymere zu ersetzen, die eine möglichst hohe mechanische Stabilität aufweisen und zu einer möglichst selektiven Eliminierung von insbesondere körpereigenen, vor allem pathogenen Biomakromolekülen in Körperflüssigkeiten, wie Blut, Plasma oder Serum, geeignet sind.

Hierbei fanden (durch Suspensionspolymerisation erhältliche) poröse Homopolymere und Co- bzw. Terpolymere von Vinylverbindungen, wie z.B. Acrylsäure, als Trägermaterialien besondere Beachtung.

Derartige Acrylsäurepolymeren sind unter den Bezeichnungen "TSK-Gel Toyopearl"^{(R)} (Hersteller: Toyo Soda Kogyo Co. Ltd., Japan u. Toso Haas, Philadelphia, PA, USA) und "Fractogel^{(R)}TSK" (Hersteller: Merck GmbH, Darmstadt) im Handel; es handelt sich dabei um sog. Hartgele, die zumindest in chemischer Hinsicht identisch sowie dank der Anwesenheit von HO-Gruppen hydrophil sind.

Sie fanden als solche, insbesondere aber nach ihrer Modifizierung (Aktivierung) durch Umsetzung mit einer Oxiranverbindung, wie z.B. Epichlorhydrin, und nachfolgender Reaktion mit NH₃, einer Amino- oder Carboxylgruppen aufweisenden Verbindung oder Cyanurchlorid als Trägerstoffe Anwendung (vgl. z.B. J. Chromatogr.239,747-754(1982) und Toya Soda Kenkyuhokoku 25(2),81-88(1981)). Auch wurden ferner solche modifizierten Produkte als Adsorbentien oder Trägerstoffe in Adsorbentien eingesetzt, die mit Glutaraldehyd aktiviert und ggf. sodann mit NaBH₄ reduziert wurden (vgl. Shin-jikkenkagaku-koza, ed.S.Ishii, Maruzen, Tokyo, 141(1978)).

Derartige aktivierte Trägerstoffe bieten die Möglichkeit, ggf. über organische Brückenglieder verschiedener chemischer Struktur und Länge (Spacer), kovalent gebundene organische Liganden mit spezifischer Wirkungsrichtung einzuführen, so daß man sozusagen "maßgeschneiderte" Adsorbentien hoher Selektivität bezüglich der Biomakromoleküle, die man jeweils abzutrennen wünscht, herstellen kann.

So wurde in der EP-A 83 112 042 u.a. als ein für die selektive Entfernung von VLDL (Lipoprotein sehr geringer Dichte) und/oder LDL (Lipoprotein geringer Dichte) aus Körperflüssigkeiten, wie Blut und Plasma, im extrakorporalen Kreislauf als geeignet bezeichnetes Adsorbens vorgeschlagen, das als Trägermaterial Toyopearl^{(R)} TSK der Typen HW 75, 65, 60 bzw. 55 (mit einer Korngröße von jeweils 50 - 100 µm (vgl. Beispiele 1 und 2-4), jedoch mit unterschiedlichen Ausschlußgrenzen) umfaßt, an das nach Umsetzung mit Epichlorhydrin ein Ligand, wie Heparin oder Chondroitin-polysulfat, kovalent gebunden wurde.

In der DE-OS 36 17 672 werden zahlreiche poröse Adsorbentien, u.a. auch für die selektive Elimination von ggf. pathogenen Biopolymeren aus wäßrigen Flüssigkeiten, z.B. Körperflüssigkeiten, wie Blut, Plasma oder Serum, vorgeschlagen, die u.a. auch aus einer organischen Festphase als Trägermaterial bestehen, an die über ein kovalent gebundenes Brückenglied (Spacer), das ein mercapto-, amino- und/oder carboxylgruppenhaltiges Mono-, Oligo- oder Polymer ist, als Ligand eine Poly(carbonsäure) oder ein Derivat derselben, welches in die freie Säureform übergeführt werden kann, kovalent gebunden ist. Diese Brückenglieder werden in das u.a. mit einer Epoxyverbindung, wie z.B. einer Diglycidverbindung, als "Kupplungsreagens" vorbehandelte Trägermaterial, das zudem anschließend mit einer Aminoverbindung, wie z.B. NH₃, umgesetzt ("derivatisiert") sein kann, eingeführt. Das so modifizierte Trägermaterial wird sodann, z.B. mit der Poly(carbonsäure) bzw. deren Derivat als Ligand, umgesetzt, nachdem letztere mit einem Carbaminsäureester, wie z.B. N-Ethoxy-carbonyl-2-ethoxy-1,2-dihydro-chinolin, aktiviert wurden.

Unter zahlreichen anderen werden als Ligand ein Polymerisat oder Copolymerisat der Acrylsäure, und als Trägermaterial generell das Handelsprodukt "Fractogel"^{(R)} genannt.

Aus GIT Fachz.Lab.27.380-389(1983) ist zu entnehmen, daß alle Typen von Fractogel^{(R)} TSK (d.h. die Typen HW 40, 50, 55 und 65) als sphärische, völlig poröse Teilchen vorliegen, deren Korngrößen beim Untertyp S im Bereich von 25 - 40 µm, und beim Untertyp F in einem solchen von 32 - 63 µm liegen. Eine Ausnahme bildet Typ HW 40 als Untertyp C, der einen Korngrößenbereich von 50 - 100 µm aufweist.

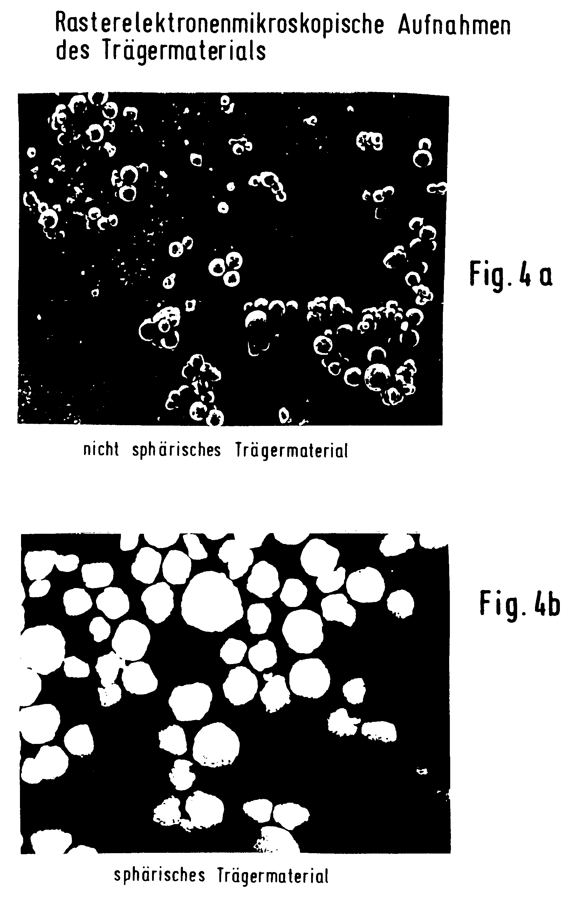

Wie aus Abb. 4 vorgenannter Druckschrift jedoch ersichtlich ist, weist der Typ HW 40 eine Ausschlußgrenze von lediglich 10² bis 10⁴ Dalton auf. Infolge der entsprechend relativ geringen Porendurchmesser ist er aber zur Abtrennung großer Biomakromoleküle (wie z.B. von LDL mit einem Molekulargewicht von > 10⁶) unbrauchbar.

Unter Ausschlußgrenze wird bekanntlich das minimale Molekulargewicht eines Moleküls verstanden, das bei der Gelpermeationschromatographie nicht (mehr) in eine Pore des Adsorbens eintreten kann.

Aus vorgenannter Druckschrift ist auch zu ersehen (vgl. insbesondere S.385, li.Sp., letzter Abs.), daß mit Adsorbentien geringerer Korngröße eine erhebliche Verbesserung der Trennschärfe zwischen den zu eliminierenden Biopolymeren (bei konstanter Selektivität) zu erreichen ist. Deshalb benutzt man in der Chromatographie bei hohen Anforderungen an die Adsorptionseigenschaften bzw. Trennleistung möglichst feines, sog. "superfine" Material mit einem Korngrößenbereich von 20 - 50 µm.

Derartige, einen Spacer und als Ligand z.B. eine Poly(carbonsäure), wie z.B. Polyacrylsäure oder aber beispielsweise Polymyxine, wie Polymyxin B, aufweisende bekannte Trägermaterialien auf Basis eines Homo-, Co- oder Terpolymerisats der Acrylsäure oder Methacrylsäure, wie z.B. auf Basis der vorgenannten Handelsprodukte, können zur Entfernung von Biomakromolekülen, wie z.B. LDL und Endoxinen aus Blutplasma durchaus geeignet sein, wenn man das Trägermaterial unter dem Gesichtspunkt der Porosität, d.h. der Ausschlußgrenze, auswählt, wobei hinsichtlich der Trennleistung eine möglichst geringe Korngröße angestrebt wird.

Bei einem Einsatz in einem extrakorporalen Kreislauf mit Vollblut sollten hingegen die Teilchen des Adsorbens eine Korngröße von mindestens 50 µm aufweisen. Dies ist dadurch bedingt, daß die im Vollblut vorhandenen größten Blutkörperchen einen Durchmesser von 20 µm besitzen, so daß das Sieb, das das Adsorbens zurückhält, eine Maschenweite von mindestens 40 µm haben muß, um die Blutzellen durchzulassen. In den mit Adsorberteilchen einer Größe von 50 µm gepackten Säulen ist der Zwischenraum zwischen den Teilchen für den Durchlaß der Blutzellen ausreichend.

Es erwies sich jedoch unerwarteterweise, daß die zuvor beschriebenen Adsorbentien auf Basis von bekannten Trägermaterialien mit einer für Vollblut erforderlichen Teilchengröße von > 50 µm und einer z.B. zur Abtrennung von LDL und Endotoxinen erforderlichen Auschlußgrenze von wenigstens etwa 5x10⁵ Dalton (gemessen mit Lipoprotein), die einen kovalent gebundenen Spacer und einen kovalent an letzteren gebundenen Liganden, beispielsweise eine Poly(carbonsäure), wie Polyacrylsäure oder Polymyxin B, aufweisen, zur Entfernung von Biomakromolekülen, wie z.B. LDL und Endotoxinen, aus Vollblut deshalb ungeeignet sind, weil hierbei eine völlig unerwünschte Thrombocytenaggregation auftritt.

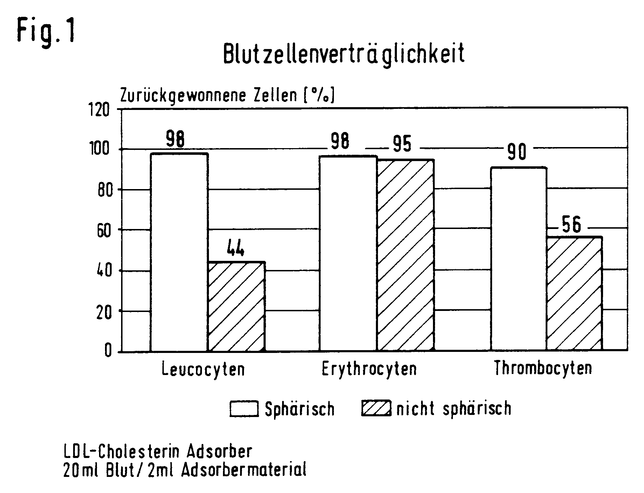

Dieses Phänomen der Blutzellenunverträglichkeit ist aus nachfolgender Abb. 1 zu ersehen (gestrichelte Flächen), wobei ein ansonsten zur Entfernung von LDL und Endotoxinen aus Vollblut als geeignet zu erachtendes Adsorbens (d.h. ein solches mit einer Korngröße von > 50 µm und einer Ausschlußgrenze von etwa 5x10⁵ Dalton, gemessen an Lipoprotein) getestet wurde, das als Trägermaterial das Handelsprodukt Toyopearl^{(R)} HW 75 SC umfaßte (welches einen Spacer und Liganden gem. Beispiel 1 aufwies). Dies ist, wie ermittelt wurde, darauf zurückzuführen, daß die bekannten Trägermaterialien, wie z.B. die aus einem Copolymeren von Glycidmethacrylat, Erythritol-dimethacrylat und Ethylenglycol bestehenden, zuvor genannten Handelsprodukte, wenn sie die erforderliche Teilchengröße und Ausschlußgrenze aufweisen, nicht sphärisch sind, sondern vielmehr als unregelmäßig geformte Aggregate vorliegen.

Die vorliegender Erfindung zugrunde liegende Aufgabe ist die Bereitstellung eines Adsorbens für den Einsatz im extrakorporalen Kreislauf mit Vollblut, das eine möglichst hohe Selektivität bezüglich der Entfernung von Biomakromolekülen, insbesondere von LDL und Endotoxinen, bei möglichst guter Blutzellenverträglichkeit besitzt.

Diese Aufgabe wird durch das im Patentanspruch 1 beschriebene Adsorbens gelöst.

Eine zusätzliche Aufgabe, die der Erfindung zugrunde liegt, ist die Bereitstellung eines derartigen Adsorbens, insbesondere zur Entfernung von Endotoxinen aus Vollblut, das zudem ein möglichst geringes Retentionsvermögen für Thrombocyten aufweist. Diese wird durch das im Patentanspruch 2 beschriebene Adsorbens gelöst.

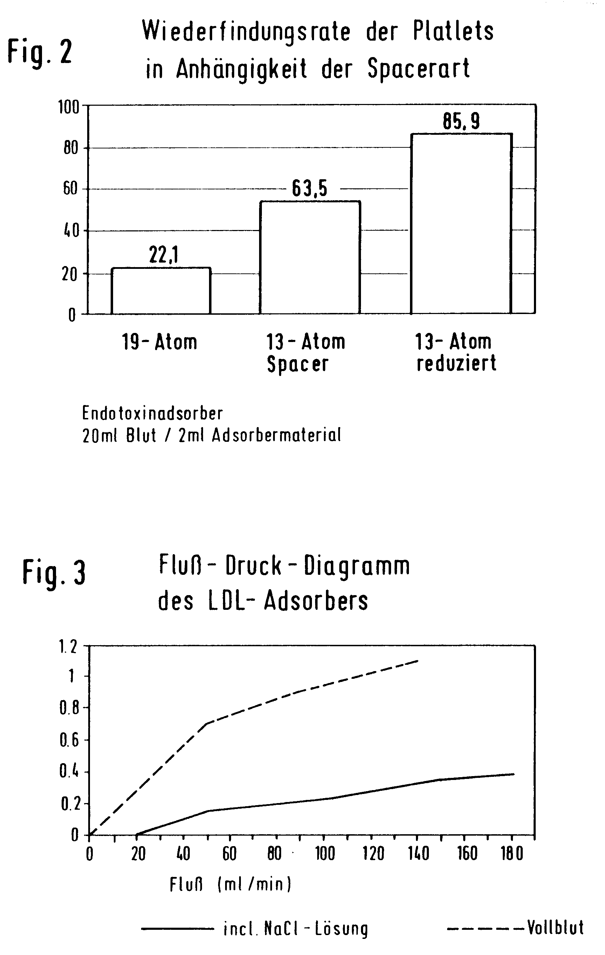

Es erwies sich nämlich, daß zudem ein Bedürfnis für derartige Adsorbentien besteht, die zur Entfernung von Endotoxinen aus Vollblut in hohem Maße geeignet sind, nämlich solchen aus einem derartigen Trägermaterial mit einem relativ langen, kovalent gebundenen, herkömmlichen Spacer mit z.B. 13 Atomen. Es zeigte sich nämlich, daß derartige, (herstellungsbedingt) Doppelbindungen aufweisende Spacer ein unerwünschtes Thrombocytenretentionsvermögen bedingen (vgl.Abb.2). Ein Beispiel für einen zwei Doppelbindungen aufweisenden herkömmlichen Spacer ist der 13-Atom-Spacer, der bei der bekannten Umsetzung des HO-Gruppen aufweisenden Trägermaterials, wie z.B. Fractogel^{(R)} und Toyopearl^{(R)}, mit Epichlorhydrin, Ethylendiamin und Glutaraldehyd in das Trägermaterial eingeführt wird.

Überraschenderweise wurde gefunden, daß nach Hydrierung der Doppelbindungen, z.B. mit NaBH₄ in an sich bekannter Weise, ein Adsorbens erhalten wird, das eine wesentlich geringere Thrombocytenmenge zurückhält (vgl. Abb. 2, rechts).

Die Erfindung wird anhand der folgenden Beispiele näher erläutert.

### Beispiel 1

In diesem Beispiel wird die Herstellung eines zur Entfernung von LDL aus Vollblut geeigneten Adsorbens beschrieben, wobei - ebenso wie in Beispiel 2 - von einem Trägermaterial ausgegangen wurde, das von der Firma Toso Haas, Philadelphia PA., USA, unter der internen Bezeichnung "Toyopearl^{(R)} HW 70 SC (56 H)" zur Verfügung gestellt wurde; es war sphärisch (vgl. Abb. 4b) und hatte eine Teilchengröße von > 70 und < 150 µm. Dieses Produkt ist ein Copolymer von Ethylenglycol, Glycidmethacrylat und Erythrol-dimethacrylat.

Das für den nachfolgend beschriebenen Vergleichstest hinsichtlich der Blutzellenverträglichkeit benutzte Adsorbens umfaßte als Trägermaterial das (bekannte) Handelsprodukt Toyopearl^{(R)} HW 75 SC, das sich von ersterem lediglich dadurch unterschied, daß es nicht sphärisch war; vielmehr wies es (infolge Teilchenagglomeration) bei gleicher Teilchengröße eine unregelmäßige Gestalt auf (vgl. Abb. 4a).

Das jeweilige Trägermaterial wurde in bekannter Weise amino-derivatisiert, und zwar durch Umsetzung
a) mit Epichlorhydrin und nachfolgender Umsetzung mit konzentriertem Ammoniak, wodurch ein 5-Atomspacer eingeführt wird;
b) mit Epichlorhydrin und Ethylendiamin, wodurch ein 8-Atomspacer eingeführt wird;
c) mit 1,4-Butandiol-diglycidoxyether und so dann Ammoniak, wodurch ein 13-Atomspacer eingeführt wird; Epichlorhydrin bzw.

Der aminoderivatisierte Träger (b) wurde wie folgt hergestellt:

Das Trägergel wurde auf einem Glasfilter mit destiliertem Wasser gewaschen und im Vakuum bei 60°C getrocknet, 5g des getrockneten Gels, 200ml 1N NaOH, und 11ml Epichlorhydrin wurde in einem 500ml Trennkolben gebracht und 3 Stunden bei 30°C gerührt, wonach durch ein Glasfilter (G4) filtriert und mit kaltem destiliertem Wasser gewaschen wurde. Dieses Gel wurde sodann in einen 500ml Trennkolben eingefüllt und mit 63ml Ethylendiamin und 35ml destiliertem Wasser versetzt; das Gemisch wurde 1,5 Stunden bei 80°C gerührt. Nach Umsetzung wurde das Gemisch durch einen Glasfilter (G4) filtriert, wonach das Gel mehrmals mit Aceton zur Entfernung nicht umgesetzten Ethylendiamins gewaschen und im Vakuum bei 60°C über Nacht getrocknet wurde. Der erhaltene aminoderivatisierte Träger mit dem so eingeführten 8-Atom-Spacer hatte folgende Struktur:
TRÄGER-O-CH₂-CH(OH)-CH₂-NH-(CH₂)₂-NH₂

Die aminoderivatisierten Träger (a) und (c) wurden auf analoge Weise hergestellt.

Zwecks Einführung von Polyacrylsäure als Ligand wurden zunächst 200 mg Polyacrylsäure in 12 ml 0,15 M Kochsalzlösung aufgelöst, wonach 200 mg N-Ethoxycarbonyl-2-ethoxy-1,2-dihydrochinolin (als Aktivierungsreagens) zugegeben wurden. Nach 30 min wurden jeweils 10 ml des oben beschriebenen amino-derivatisierten Trägermaterials zugegeben; das Gemisch wurde bei Raumtemperatur 10 Std. reagieren gelassen.

Das Adsorbens mit einem sphärischen Trägermaterial wurde einer Reihe von Tests unterzogen.

### (A) Vollblutmessungen/spezifische Bindungskapazität

Diese wurden bei dem Adsorbens gemäß Beispiel 1 zur Ermittlung der LDL-Bindungskapazität wie folgt mit frischem Blut von gesunden Freiwilligen durchgeführt:

In einer Säule von 10 mm Durchmesser wurden 2 ml des Adsorbens gemäß Beispiel 1 gefüllt. 20 ml mit ACDA (1:10) versetztes Frischblut wurde über den Adsorber gepumpt (1 ml/min). Gemessen wurden die Blutzellen vor und nach der Behandlung.

Beim Adsorbens gemäß Beispiel 2 wurde hingegen die Endotoxin-Bindungskapazität in physiologischer Kochsalzlösung (Standard: E.coli 055:B5) gemessen.

Die für das Adsorbens gemäß Beispiel 1(a) ermittelte LDL-Bindungskapazität betrug 8 mg/ml Adsorbens.

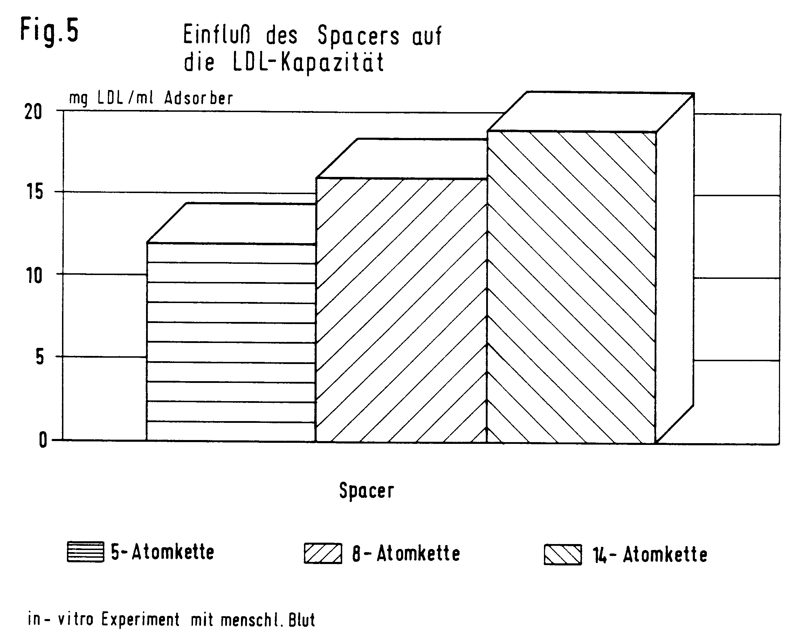

Die durch in vitro-Tests mit menschlichem Blut ermittelte Auswirkung der Spacerlänge von Adsorbentien gemäß Beispiel 1 ((a), (b) und (c)) auf die LDL-Kapazität ist in Abb. 5 wiedergegeben.

### Blutzellenverträglichkeit:

Bei dieser mit dem Adsorbens gemäß Beispiel 1 und dem entsprechenden, jedoch nicht-sphärischen Vergleichs-Adsorbens durchgeführten Untersuchung wurden 20 ml Blut/2 ml Adsorbens benutzt. Die Ergebnisse sind aus Abb. 1 zu ersehen; sie zeigen eine beträchtliche Überlegenheit des Adsorbens mit sphärischer Gestalt hinsichtlich der Leuko- und Thrombocyten-Verträglichkeit.

### Toxikologische Untersuchungen:

Mit dem LDL-Adsorbens gemäß Beispiel 1 wurden folgende toxikologische Versuche durchgeführt:
1. Physiko-chemischer Test (USP XXI)
2. Systemische Verträglichkeit an der Maus (USP XXI)
3. Intrakutantest am Kaninchen (USP XXI)
4. Sensibilisierungstest am Meerschweinchen (OECD-Guideline No.406)
5. Hämolysetest am Kaninchen
6. Agar-Overlay-Test (vgl. Evalution of Hemodialysis Membranes, US Depart.Health & Welfare 1977, Publ.No.NIH-77/1234)
7. Amestest (OECD-Guideline No.471)

Bei diesen Versuchen wurden keine toxischen Effekte festgestellt. Das Adsorbermaterial ist biologisch verträglich.

### Druckstabilität:

In einem Adsorbergehäuse mit dem Durchmesser von 48 mm wurden 400 ml Adsorbens gemäß Beispiel 1 gepackt. Es wurde Vollblut mit verschiedenen Flüssen jeweils 15 min über den Adsorber gepumpt. Es wurde am Filtereingang der Druck gemessen. Der Druck blieb jeweils stabil über 15 min. Das Druck-Fluß-Diagramm ist in Abb. 3 dargestellt. Die Stabilität der Drücke sowie die Linearität des Druck-Fluß-Diagramms zeigen, daß das Adsorbens bei diesen Drücken stabil ist.

Unter Verwendung des gleichen Gehäuses und von ebenso 400 ml des Adsorbens gemäß Beispiel 1 wurden in Anlehnung an die DIN-Vorschrift 58 362 (Prüfung auf partikuläre Verunreinigung) folgende Partikel gezählt:

| Größe der Partikel (µm) nach Durchlauf 10 l | 25-50 | 51-100 | über 100 |
|---|---|---|---|
| Anzahl der Partikel | 31 | 2 | 0 |

Alle diese Versuche wurden mit einem sterilisierten Adsorbens durchgeführt, das bei 121°C während 30 min autoklaviert worden war.

### Beispiel 2

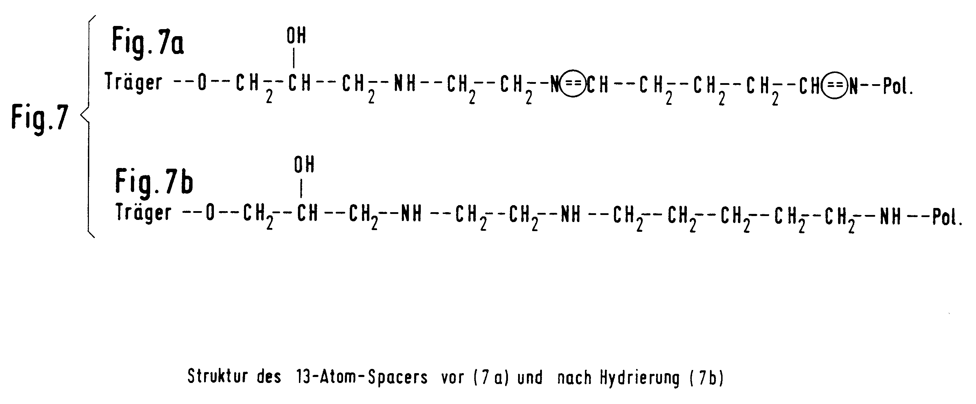

In das in Beispiel 1 beschriebene sphärische Trägermaterial wurde in bekannter Weise durch Umsetzung mit Epichlorhydrin und anschließend mit Ethylendiamin bzw. mit Butandioldiglycidoxyether und anschließend mit Ethylendiamin ein aktiviertes Trägermaterial hergestellt. Hierzu wurden 40 g des Trägermaterials in 125 ml einer 1 M NaOH-Lösung mit 8,25 ml Epichlorhydrin bzw. 1,4-Butandioldiglycidoxyether und sodann mit 47 ml Ethylendiamin umgesetzt. Das derart aktivierte Trägermaterial wurde 12 Std. mit einer 5%igen Lösung von Glutardialdehyd inkubiert. Hierdurch wurde in das Trägermaterial ein zwei Doppelbindungen aufweisender 13-Atom-Spacer bzw. ein 19-Atom-Spacer eingeführt. Die Struktur des 13-Atom-Spacers (vor und nach seiner Hydrierung) ist aus Abb. 7 ersichtlich, wobei "Pol." der an ihn gebundene Ligand Polymyxin bedeutet.

Anschließend wurde an diesen Spacer Polymyxin B als Ligand kovalent gebunden, indem in bekannter Weise die Bindungsreaktion in 250 ml einer 10 mM-Lösung von MgCl₂ mit 0,6 g Polymyxin B-sulfat durchgeführt wurde.

Ein Teil des Adsorbens mit dem 13-Atom-Spacer wurde in bekannter Weise zur Hydrierung der Doppelbindungen des Spacers mit 5 % NaBH₄ mehrmals inkubiert.

Unter Verwendung von jeweils 20 ml Blut/2 ml Adsorbens wurde sowohl (I) das Adsorbens mit dem unreduzierten, als auch (II) das mit dem reduzierten 13-Atom-Spacer (sowie das Adsorbens mit dem 19-Atom-Spacer) hinsichtlich einer Retention der Thrombocyten untersucht. Völlig unerwartet zeigte sich (vgl. Abb.2), daß (II) eine wesentlich geringere Menge an Thrombocyten zurückhielt.

### Beispiel 3

In das nachfolgend näher beschriebene sphärische Trägermaterial auf Basis eines Methacrylsäure-Terpolymeren wurde durch Aminoderivatisierung gemäß Beispiel 1 ein 8-Atom-Spacer eingeführt, an den Polyacrlysäure als Ligand in der in Bsp. 1 beschriebenen Weise kovalent gebunden wurde, wobei ein Adsorbens erhalten wurde, das sich zur Abtrennung von LDL aus Vollblut im extrakorporalen Kreislauf als geeignet erwies.

Das eingesetzte Trägermaterial war ein Terpolymerisat von Methacrylamid, N-Methylen-bis-methacrylamid und Allylglycidylether mit einer Größenverteilung der sphärischen Teilchen im Bereich von 50 bis 200 µm und einer Ausschlußgrenze von > 5x10⁵ Dalton. Die Teilchen wiesen eine makroporöse Struktur mit Kanälen, Hohlräumen und Kavernen auf. Das Porenvolumen (ermittelt nach der Quecksilbermethode) betrug 1,74 cm³/g, und der mittlere Porendurchmesser war 35 nm. Die spezifische BET-Oberfläche (isotherme Stickstoffadsorption) betrug 183 m²/g.

Toxikologische Untersuchungen (USP XXI) zeigten, daß das Trägermaterial und das hieraus hergestellte Adsorbens toxikologisch unbedenklich sind. Letzteres erwies sich ferner als biologisch verträglich.

Nach der in Beispiel 1 beschriebenen Methode wurde die LDL-Bindungskapazität des Adsorbens aus Vollblut mit 3,6 mg/ml ermittelt.

Dieser Wert ist geringer als der beim Adsorbens des Beispiels 1(a) gemessene, was darauf zurückzuführen ist, daß das Adsorbens gemäß vorliegendem Bsp. 3 eine geringere Ausschlußgrenze als das Adsorbens gemäß Bsp. 1 aufweist.

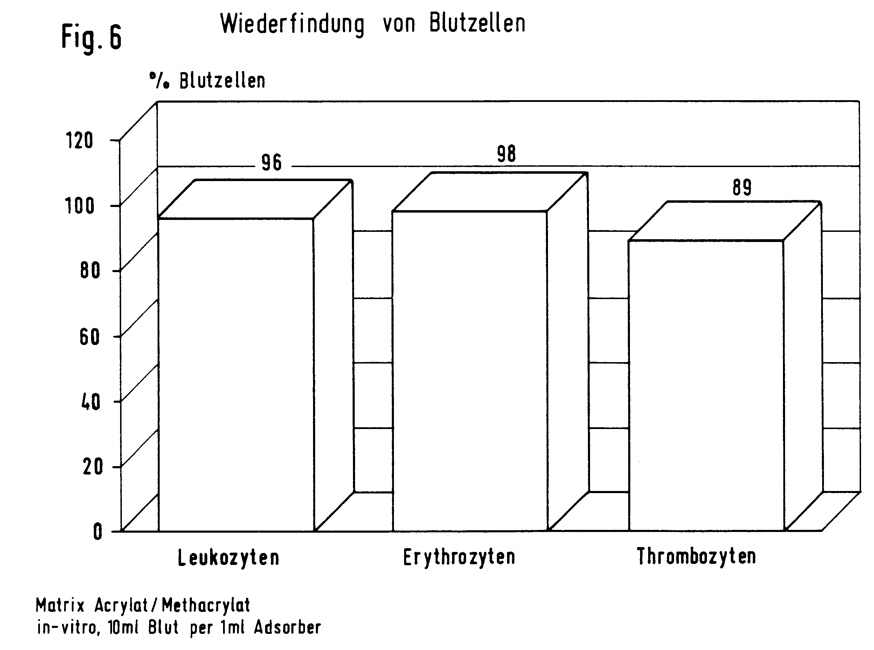

Die Blutzellenverträglichkeit des Adsorbens wurde wir im Bsp. 1 ermittelt. Die Ergebnisse sind aus Abb. 6 zu ersehen. Das Adsorbens zeigte demgemäß ein unerwartet geringes Rückhaltevermögen für Leukozyten, Erythrozyten und auch Thrombozyten.

## Patentansprüche (Patentansprüche für folgende(n) Vertragsstaat(en): AT, CH, LI, DE, FR, GB, IT, NL, SE)

1. Zur Eliminierung von Biomakromolekülen, insbesondere von LDL und Endotoxinen, aus Vollblut in extrakorporalem Kreislauf geeignetes Adsorbens, umfassend ein poröses Trägermaterial aus einem Homo-, Co- oder Terpolymerisat der Acrylsäure und/oder Methacrylsäure mit einem Teilchengrößenbereich von etwa 50 bis 250 µm und einer Ausschlußgrenze von mindestens 5 x 10⁵ Dalton sowie einen organischen Liganden, der über einen Spacer an das Trägermaterial kovalent gebunden ist, dadurch gekennzeichnet, daß das Trägermaterial überwiegend in Form von unaggregierten Einzelteilchen regelmäßiger, sphärischer Gestalt vorliegt.

2. Adsorbens gemäß Anspruch 1, dadurch gekennzeichnet, daß der Spacer keine Doppelbindungen aufweist.

3. Adorbens gemäß Anspruch 1 oder 2, dadurch gekennzeichnet, daß das Trägermaterial einen Teilchengrößenbereich von etwa 50 bis 150 µm und eine Ausschlußgrenze von mindestens 10⁷ aufweist.

## Patentansprüche (Patentansprüche für folgende(n) Vertragsstaat(en): ES)

1. Verfahren zur Herstellung eines Adsorbens, das zur Eliminierung von Biomakromolekülen, insbesondere von LDL und Endotoxinen, aus Vollblut in extrakorporalem Kreislauf geeignet ist, bei dem ein organischer Ligand über einen Spacer an ein poröses Trägermaterial aus einem Homo-, Co- oder Terpolymerisat der Acrylsäure und/oder Methacrylsäure mit einem Teilchengrößenbereich von etwa 50 bis 250 µm und einer Ausschlußgrenze von mindestens 5 x 10⁵ Dalton kovalent gebunden wird, dadurch gekennzeichnet, daß das Trägermaterial überwiegend in Form von unaggregierten Einzelteilchen regelmäßiger, sphärischer Gestalt vorliegt.

2. Verfahren gemäß Anspruch 1, dadurch gekennzeichnet, daß der Spacer keine Doppelbindungen aufweist.

3. Verfahren gemäß Anspruch 1 oder 2, dadurch gekennzeichnet, daß das Trägermaterial einen Teilchengrößenbereich von etwa 50 bis 150 µm und eine Ausschlußgrenze von mindestens 10⁷ aufweist.

## Claims (Claims for the following Contracting State(s): AT, CH, LI, DE, FR, GB, IT, NL, SE)

1. An absorbent material suitable for the elimination of biomacromolecules, in particular LDL and endotoxins, in an extracorporeal circuit with whole blood, comprising a porous carrier material of a homo-, co-, or terpolymerizate of acrylic acid and/or methacrylic acid with a particle grain size range of between 50 and 250 µm and an exclusion limit of at least 5 x 10⁵ daltons, as well as an organic ligand which is covalently bound to the carrier material via a spacer, characterized in that the carrier material is present predominantly in the form of unaggregated individual particles of regular spherical shape.

2. An absorbent in accordance with Claim 1, characterized in that the spacer contains no double bonds.

3. An absorbent in accordance with Claims 1 or 2, characterized in that carrier material has a particle size of between 50 an 150 µm and an exclusion limit of at least 10⁷ daltons.

## Claims (Claims for the following Contracting State(s): ES)

1. The process for preparing an absorbent material suitable for the elimination of biomacromolecules, in particular LDL and endotoxins, in an extracorporeal circuit with whole blood, wherein an organic ligand is covalently bound via a spacer to a porous carrier material of a homo-, co-, or terpolymerizate of acrylic acid and/or methacrylic acid with a particle grain size range of between 50 and 250 µm and an exclusion limit of at least 5 x 10⁵ daltons, characterized in that the carrier material is present predominantly in the form of unaggregated individual particles of regular spherical shape.

2. The process in accordance with Claim 1, characterized in that the spacer contains no double bonds.

3. The process in accordance with Claims 1 or 2, characterized in that carrier material has a particle size of between 50 an 150 µm and an exclusion limit of at least 10⁷ daltons.

## Revendications (Revendications pour l'(les) Etat(s) contractant(s) suivant(s): AT, CH, LI, DE, FR, GB, IT, NL, SE)

1. Adsorbant approprié pour l'élimination de biomacromolécules, plus particulièrement des LDL et des endotoxines, du sang total, dans un circuit extracorporel comprenant une matière support poreuse d'un homo-, co- ou terpolymère de l'acide acrylique et/ou méthacrylique, ayant une granulométrie dans l'intervalle d'environ 50 à 250 µm et une limite d'exclusion d'au moins 5 x 10⁵ Dalton, ainsi qu'un ligand organique, lequel ligand est lié par une liaison covalente à la matière support par l'intermédiaire d'un spacer caractérisé en ce que la matière support est présente principalement sous forme de particules individuelles non agrégées de forme sphérique régulière.

2. Adsorbant selon la revendication 1, caractérisé en ce que le spacer ne présente pas de doubles liaisons.

3. Adsorbant selon la revendication 1 ou 2, caractérisé en ce que la matière support présente une granulométrie d'environ 50 à 150 µm et une limite d'exclusion d'au moins 10⁷.

## Revendications (Revendications pour l'(les) Etat(s) contractant(s) suivant(s): ES)

1. Procédé de préparation d'un adsorbant approprié pour l'élimination de biomacromolécules, plus particulièrement des LDL et des endotoxines, du sang total dans un circuit extracorporel comprenant une matière support poreuse d'un homo-, co- ou terpolymère de l'acide acrylique et/ou méthacrylique, ayant une granulométrie dans l'intervalle d'environ 50 à 250 µm et une limite d'exclusion d'au moins 5 x 10⁵ Dalton ainsi qu'un ligand organique, lequel ligand est lié par une liaison covalente à la matière support par l'intermédiaire d'un spacer caractérisé en ce que la matière support est présente principalement sous forme de particules individuelles non agrégées, de forme sphérique régulière.

2. Procédé selon la revendication 1, caractérisé en ce que le spacer ne présente pas de doubles liaisons.

3. Procédé selon la revendication 1 ou 2 caractérisé en ce que la matière support a une granulométrie d'environ 50 à 150 µm et une limite d'exclusion d'au moins 10⁷.
